# EUROPEAN PATENT APPLICATION

(11) **EP 4 686 443 A1**
(43) Date of publication of application: **04.02.2026**
(21) Application number: 25153574.6
(22) Date of filing: 23.01.2025
(51) Int. Cl.: A47L 11/40

(54) **METHOD FOR CONTROLLING ROBOT, COMPUTER PROGRAM PRODUCT, ROBOT, AND STORAGE MEDIUM**

(30) Priority: 31.07.2024 CN 202411047620
(71) Applicant: Beijing Xiaomi Mobile Software Co., Ltd., Beijing 100085 (CN)
(72) Inventor: ZHANG, Xiuyun, Beijing, 100085 (CN)
(74) Representative: Dehns Germany Partnerschaft mbB

(57) **Abstract**

The disclosure provides a method and apparatus for controlling a robot, a computer program product, a robot, and a storage medium. The method includes: (S101) obtaining an image collected in real time; (S102) determining whether a current scene is a specific scene according to the image collected in real time; and (S103) controlling, in a case where determining that the current scene is the specific scene, the robot to execute a cleaning task corresponding to the specific scene.

## Description

### TECHNICAL FIELD

The disclosure relates to the technical field of robots, and particularly relates to a method and apparatus for controlling a robot, a computer program product, a robot, and a storage medium.

### BACKGROUND OF THE INVENTION

A cleaning robot (hereinafter referred to as a robot) is a kind of cleaning device capable of cleaning hard floors, sucking away sewage and disposing the sewage from a site. Robots have been widely used in all walks of life, especially in stations, docks, airports, workshops, warehouses, schools, hospitals, restaurants, shopping malls and other places with vast hard floors. A concept of cleaning with machines instead of manpower has enjoyed popular support. Recent acceptance of such a new cleaning method with robots leads to a demand surge in robots.

### SUMMARY OF THE INVENTION

To solve problems in the related art, the disclosure provides a method and apparatus for controlling a robot, a computer program product, a robot, and a storage medium.

According to a first aspect of examples of the disclosure, the disclosure provides a method for controlling a robot. The method includes:
obtaining an image collected in real time;
determining whether a current scene is a specific scene according to the image collected in real time; and
controlling, in a case where determining that the current scene is the specific scene, the robot to execute a cleaning task corresponding to the specific scene.

According to any embodiment of the disclosure, the obtaining the image collected in real time includes:
obtaining the image collected by an image collecting component in real time; and/or,
receiving an image transmitted by at least one image collecting device, where the at least one image collecting device is in communication connection to the robot.

According to any embodiment of the disclosure, the method further includes:
receiving a scene triggering message transmitted by at least one image collecting device, and controlling the robot to execute a cleaning task corresponding to a specific scene indicated by the scene triggering message.

According to any embodiment of the disclosure, the cleaning task includes a to-be-cleaned zone, cleaning time, and a cleaning mode.

The controlling the robot to execute a cleaning task corresponding to the specific scene includes:
controlling the robot to clean the to-be-cleaned zone in the cleaning mode during the cleaning time.

According to any embodiment of the disclosure, the determining whether the current scene is the specific scene according to the image collected in real time includes:
inputting the image collected in real time into a scene identification model, and determining whether the current scene is the specific scene.

According to any embodiment of the disclosure, a training process of the scene identification model includes:
training an original model based on a training sample in a training set, and obtaining the scene identification model, where the training sample is an image sample or a video sample, and the training sample is marked with a scene label.

According to any embodiment of the disclosure, the cleaning task further includes a self-cleaning mode. The controlling the robot to execute the cleaning task corresponding to the specific scene includes:
controlling the robot to conduct self-cleaning in the self-cleaning mode.

According to any embodiment of the disclosure, the specific scene includes at least one of the following scenes:
a target site staining scene; and
a target object scattering scene.

According to any embodiment of the disclosure, the controlling the robot to clean the to-be-cleaned zone in the cleaning mode during the cleaning time includes:
controlling, in a case where determining that the specific scene is the target site staining scene, the robot to clean a target site in a cleaning mode adapted to the target site after preset duration from an end moment of use of the target site; and
controlling, in a case where determining that the specific scene is the target object scattering scene, the robot to clean a target object scattering zone in a cleaning mode adapted to a target object after preset duration from a target object scattering moment in a case of no person in the target object scattering zone.

According to any embodiment of the disclosure, in a case where determining that the specific scene is the target object scattering scene, the method further includes:
detecting, in a process of controlling the robot to conduct self-cleaning, components in cleaning accessories of the robot until the cleaning accessories include no components of a target object.

According to any embodiment of the disclosure, the detecting components in cleaning accessories of the robot until the cleaning accessories include no components of the target object includes:
detecting the components in the cleaning accessories of the robot after periodic self-cleaning of the robot is finished;
controlling, in a case where detecting that the cleaning accessories include the components of the target object, the robot to re-conduct the periodic self-cleaning; and
controlling, in a case where detecting that the cleaning accessories include no components of the target object, the robot to finish self-cleaning.

According to any embodiment of the disclosure, the method further includes:
controlling, in a process that the robot executes a scheduled cleaning task or a cleaning task instructed by a user instruction, the robot to stop the scheduled cleaning task or the cleaning task instructed by the user instruction and to execute the cleaning task corresponding to the specific scene in a case where receiving triggering information of the specific scene.

According to an embodiment of the disclosure, the determining whether the current scene is the specific scene according to the image collected in real time includes:
determining whether a current scene satisfies a condition of a specific scene according to the image collected in real time;
determining, in a case where determining that the current scene satisfies the condition of the specific scene, the current scene is the specific scene, otherwise determining the current scene is an ordinary scene.

According to a second aspect, the disclosure further provides an apparatus for controlling a robot. The apparatus includes:
an image obtaining module configured to obtain an image collected in real time;
a determining module configured to determine whether a current scene is a specific scene according to the image collected in real time; and
a task executing module configured to control, in a case where determining that the current scene is the specific scene, the robot to execute a cleaning task corresponding to the specific scene.

In one of the examples, the image obtaining module is specifically configured to:
obtain the image collected by an image collecting component in real time; and/or,
receive an image transmitted by at least one image collecting device, where the at least one image collecting device is in communication connection to the robot.

In one of the examples, the apparatus for controlling a robot further includes:
a first triggering module configured to receive a scene triggering message transmitted by at least one image collecting device, and control the robot to execute a cleaning task corresponding to a specific scene indicated by the scene triggering message.

In one of the examples, the cleaning task includes a to-be-cleaned zone, cleaning time, and a cleaning mode.

The task executing module is specifically configured to:
control the robot to clean the to-be-cleaned zone in the cleaning mode during the cleaning time.

In one of the examples, the determining module is specifically configured to:
input the image collected in real time into a scene identification model, and determine whether the current scene is the specific scene.

In one of the examples, the apparatus for controlling a robot further includes:
a model training module configured to train an original model based on a training sample in a training set, and obtain the scene identification model, where the training sample is an image sample or a video sample, and the training sample is marked with a scene label.

In one of the examples, the cleaning task further includes a self-cleaning mode. The task executing module is specifically configured to:
control the robot to conduct self-cleaning in the self-cleaning mode.

In one of the examples, the specific scene includes at least one of the following scenes:
a target site staining scene; and
a target object scattering scene.

In one of the examples, the task executing module is specifically configured to:
control, in a case where determining that the specific scene is the target site staining scene, the robot to clean a target site in a cleaning mode adapted to the target site after preset duration from an end moment of use of the target site; and
control, in a case where determining that the specific scene is the target object scattering scene, the robot to clean a target object scattering zone in a cleaning mode adapted to a target object after preset duration from a target object scattering moment in a case of no person in the target object scattering zone.

In one of the examples, in a case where determining that the specific scene is the target object scattering scene, the apparatus for controlling a robot further includes:
a component detecting module configured to detect, in a process of controlling the robot to conduct self-cleaning, components in cleaning accessories of the robot until the cleaning accessories include no components of a target object.

In one of the examples, the component detecting module is specifically configured to:
detect the components in the cleaning accessories of the robot after periodic self-cleaning of the robot is finished;
control, in a case where detecting that the cleaning accessories include the components of the target object, the robot to re-conduct the periodic self-cleaning; and
control, in a case where detecting that the cleaning accessories include no components of the target object, the robot to finish self-cleaning.

In one of the examples, the apparatus for controlling a robot further includes:
a second triggering module configured to control, in a process that the robot executes a scheduled cleaning task or a cleaning task instructed by a user instruction, the robot to stop the scheduled cleaning task or the cleaning task instructed by the user instruction and to execute the cleaning task corresponding to the specific scene in a case where receiving triggering information of the specific scene.

In one of the examples, the determining module is specifically configured to:
determine whether a current scene satisfies a condition of a specific scene according to the image collected in real time;
determine, in a case where determining that the current scene satisfies the condition of the specific scene, the current scene is the specific scene, otherwise determining the current scene is an ordinary scene.

According to a third aspect, the disclosure provides a computer program product. The computer program product includes a computer program/instruction. When the computer program/instruction is executed by a processor, steps of the method according to any one of the examples are implemented.

According to a fourth aspect, the disclosure provides a robot. The robot includes a memory, a processor, and a computer program stored in the memory and runnable on the processor. When the computer program is executed by the processor, steps of the method according to any one of the examples are implemented.

According to a fifth aspect, the disclosure provides a non-transitory computer-readable storage medium. The non-transitory computer-readable storage medium stores a computer program. When the computer program is executed by a processor, steps of the method according to any one of the examples are implemented.

The technical solution provided by the examples of the disclosure can have the following beneficial effects:

In the related art, a robot can only execute a single and fixed cleaning task. Compared with that, in the examples of the disclosure, according to the obtained image collected in real time, whether the current scene is the specific scene is determined, and in a case where determining that the current scene is the specific scene, the robot may be automatically controlled to execute the cleaning task corresponding to the specific scene. Functions of identifying a scene and triggering the cleaning task in the specific scene are added to the robot, and a user does not need to manually set and transmit a cleaning instruction to the robot, such that simplicity of user operation and cleaning timeliness of stained zones can be enhanced, and user experience can be improved.

It is to be understood that the above general description and the following detailed description are merely illustrative and explanatory, instead of limiting the disclosure.

### BRIEF DESCRIPTION OF DRAWINGS

Accompanying drawings here are incorporated in the description as a constituent part of the disclosure, illustrate examples conforming to the disclosure, and serve to describe principles of the disclosure together with the description.
Fig. 1 is a flow diagram of a method for controlling a robot according to some examples;
Fig. 2 is a flow diagram of another method for controlling a robot according to some examples;
Fig. 3 is a flow diagram of yet another method for controlling a robot according to some examples;
Fig. 4 is a block diagram of an apparatus for controlling a robot according to some examples; and
Fig. 5 is a structural diagram of a robot according to some examples.

### DETAILED DESCRIPTION OF THE INVENTION

Examples will be described in detail here and shown in the accompanying drawings illustratively. When the following description involves the accompanying drawings, unless otherwise specified, a same number in different accompanying drawings denotes same or similar elements. The embodiments described in the following examples do not denote all embodiments consistent with the disclosure. On the contrary, the embodiments are merely instances of an apparatus and a method consistent with some aspects of the disclosure as detailed in the appended claims.

The terms used in the disclosure are merely to describe specific examples, instead of limiting the disclosure. The singular forms such as "a", "an", "the", and "this" used in the disclosure and the appended claims are also intended to include the plural forms, unless otherwise clearly stated in the context. It is to be further understood that the term "and/or" used here refers to and includes any of one or more of the associated listed items or all possible combinations.

It is to be understood that although the terms such as first, second and third may be used to describe various information in the disclosure, the information is not to be limited to the terms. The terms are merely used to distinguish the same type of information from each other. For instance, without departing from the scope of the disclosure, first information can also be called second information, and similarly, second information can also be called first information. Depending on the context, the word "if' used here can be interpreted as "when" or "at the time of" or "in a case where determining".

With wide acceptance and increasing demand for robot applications, users have increasing expectations for robots with more intelligent response and capable of providing more flexible cleaning solutions. In the related art, a robot executes a single and fixed cleaning task. The robot executes the cleaning task by mainly depending on a preset scheduled cleaning task or a cleaning task instructed by a user instruction. In the face of unexpected cases (for instance, infant urination) in a scene, a user needs to notice the case and manually transmit a cleaning task for the unexpected case. Thus, user operation is more complex, a stained zone is not cleaned timely, and user experience is degraded.

In order to solve the above problems, the disclosure provides a method for controlling a robot, a computer program product, a robot, and a storage medium. The method is applied to a control scene of the robot, such as a control scene of a cleaning robot. Optionally, the method for controlling a robot may be executed by a control system for the robot. Optionally, the control system may be integrated locally in the robot. That is, the robot may conduct scene identification by means of a task executing system, and determine and execute, in a case where determining that the current scene is a specific scene, a cleaning task corresponding to the specific scene. Alternatively, the task executing system may be integrated into a server, or may run on a cloud or other network servers. The task executing system may interact with the robot through a network, determine the condition of the current scene of the robot, determine, in a case where determining that the current scene is the specific scene, the cleaning task corresponding to the specific scene, and transmit the cleaning task to the robot, such that the robot is controlled to execute the cleaning task.

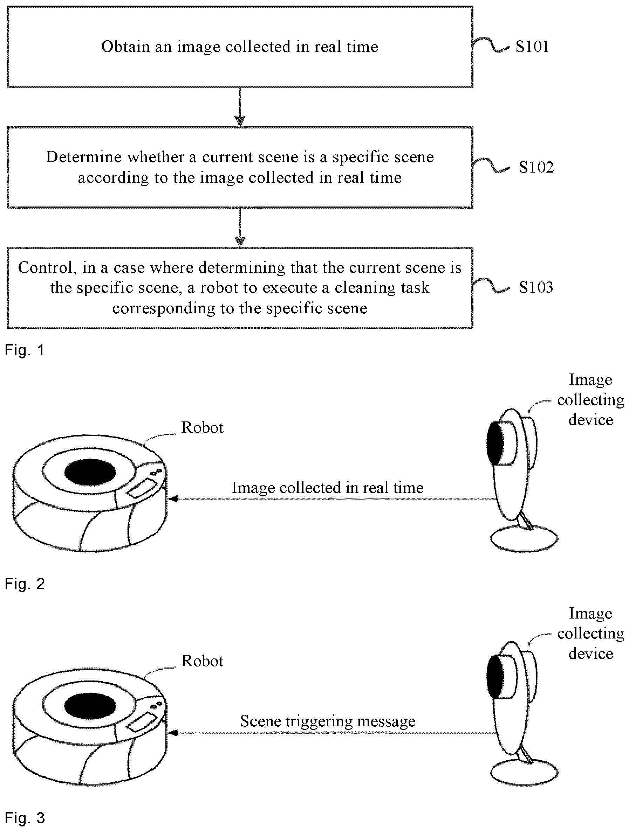

A first aspect of the disclosure provides a method for controlling a robot. With reference to Fig. 1, the method includes the following steps:

In step S101, an image collected in real time is obtained.

The image is an image collected through real-time image collection of a current scene.

It is to be noted that S101 may be the step that the image collected by an image collecting component in real time is obtained; and/or, as shown in Fig. 2, the step that an image transmitted by at least one image collecting device is received. The at least one image collecting device is in communication connection to the robot. The image collecting device is a device capable of linkage with the robot and having an image collecting function, such as a home monitoring camera. The image collecting component is a component, configured to collect an image, of the robot.

Optionally, the image collecting component may be controlled to collect a surrounding image in real time, and further obtain the image collected in real time. Alternatively, interaction with the image collecting device in communication connection may be conducted through a network, and the image of the current scene collected by the image collecting device in real time may be obtained. The image collected by the image collecting component and/or the image collecting device in real time is obtained, such that comprehensiveness and clarity of the obtained image can be improved.

In step S102, whether the current scene is a specific scene is determined according to the image collected in real time.

The specific scene is a preset scene that may trigger a cleaning task. The specific scene may include at least one of the following scenes: a target site staining scene, which may be that a user just finishes eating in the restaurant if a target site is a restaurant, for instance; and a target object scattering scene, which may be dog food scattering or infant urination if a target object is dog food or infant urine, for instance.

In one example, whether the current scene is the specific scene is determined according to the image collected in real time includes: whether the current scene satisfies a condition of the specific scene is determined according to the image collected in real time; in a case where determining that the current scene satisfies the condition of the specific scene, the current scene is the specific scene is determined, otherwise the current scene is an ordinary scene is determined.

The condition of the specific scene is a condition configured to determine the specific scene.

Optionally, feature extraction may be conducted on the image collected in real time, and at least one candidate feature may be obtained. Then, each candidate feature is compared with a condition feature of a specific scene. If the candidate feature includes at least one condition feature, it may be determined that the current scene satisfies the condition of the specific scene, that is, the current scene is the specific scene, otherwise the current scene is an ordinary scene. For instance, if the candidate feature includes the condition feature that user stay time in the target site exceeds a preset threshold, it may be determined that the current scene satisfies the condition of the specific scene, that is, the current scene is the specific scene.

In step S103, in a case where determining that the current scene is the specific scene, the robot is controlled to execute a cleaning task corresponding to the specific scene.

Optionally, in a case where determining that the current scene is the specific scene, the cleaning task corresponding to the current scene may be determined according to the current scene on the basis of a preset mapping relation between the specific scene and the cleaning task, and the robot may be controlled to execute the determined cleaning task.

Further, if the cleaning task may include a to-be-cleaned zone, cleaning time, and a cleaning mode, a to-be-cleaned zone, cleaning time and a cleaning mode corresponding to the current scene may be determined according to the current scene, and then the robot may be controlled to clean the to-be-cleaned zone in the cleaning mode during the cleaning time.

Specifically, in a case where determining that the specific scene is the target site staining scene, the robot may be controlled to clean the target site in a cleaning mode adapted to the target site after preset duration from an end moment of use of the target site. For instance, if the specific scene is that a user is eating in a restaurant, a cleaning mode adapted to the restaurant may be determined to be an absorption and mopping mode according to the restaurant as the target site, and then the robot may be controlled to clean the restaurant in the absorption and mopping mode adapted to the restaurant after 10 min from an end moment of use of the target site (that is, the restaurant).

In a case where determining that the specific scene is the target object scattering scene, the robot may be controlled to clean a target object scattering zone in a cleaning mode adapted to a target object after preset duration from a target object scattering moment in a case of no person in the target object scattering zone. For instance, in a case where determining that the specific scene is dog food scattering, a cleaning mode adapted to dog food may be determined to be a sweeping mode according to the dog food as the target object, and then the robot may be controlled to clean a dog food scattering zone in the sweeping mode adapted to the dog food after 5 min from a dog food scattering moment in a case of no person in the dog food scattering zone.

In the related art, a robot can only execute a single and fixed cleaning task. Compared with that, in the examples of the disclosure, according to the obtained image collected in real time, whether the current scene is the specific scene is determined, and in a case where determining that the current scene is the specific scene, the robot may be automatically controlled to execute the cleaning task corresponding to the specific scene. Functions of identifying a scene and triggering the cleaning task in the specific scene are added to the robot, and a user does not need to manually set and transmit a cleaning instruction to the robot, such that simplicity of user operation and cleaning timeliness of stained zones can be enhanced, and user experience can be improved.

On the basis of the above example, in one example, in a process that the robot executes a scheduled cleaning task or a cleaning task instructed by a user instruction, the robot is controlled to stop the scheduled cleaning task or the cleaning task instructed by the user instruction and to execute the cleaning task corresponding to the specific scene in a case where receiving triggering information of the specific scene.

The scheduled cleaning task is a preset task of starting cleaning at a fixed moment, and for instance, cleaning a whole house in an elution mode at 8:00 every night. The cleaning task instructed by the user instruction is a cleaning task transmitted by the user through an application. The triggering information is information generated by determining the current scene to be the specific scene, and may include the determined specific scene.

Optionally, in the process that the robot is currently executing the scheduled cleaning task or the cleaning task instructed by the user instruction, the specific scene in the triggering information may be obtained in a case where receiving the triggering information including the specific scene, and the cleaning task corresponding to the specific scene may be determined. Then, the robot may be stopped and controlled to execute the cleaning task as a priority. After the cleaning task corresponding to the specific scene is finished, the scheduled cleaning task or the cleaning task instructed by the user instruction continues to be executed. It is to be noted that the cleaning task corresponding to the specific scene is set as a highest priority, such that the cleaning task corresponding to the specific scene may be given the highest priority, thus avoiding indoor stains caused by the specific scene and improving user experience.

In one example, as shown in Fig. 3, a scene triggering message transmitted by at least one image collecting device may be received, and the robot may be controlled to execute a cleaning task corresponding to a specific scene indicated by the scene triggering message.

The scene triggering message may be a scene triggering message that is generated after the image collected in real time is identified by the image collecting device and the current scene is determined to be a specific scene and that includes the specific scene.

Optionally, the robot may be directly connected to the at least one image collecting device through a network, and obtain the scene triggering message, including the specific scene, transmitted by the at least one image collecting device. Alternatively, the robot is interconnected to the at least one image collecting device through a cloud, the at least one image collecting device may upload the determined scene triggering message to the cloud, and the robot may obtain the scene triggering message from the cloud. Further, on the basis of the preset mapping relation between the specific scene and the cleaning task, the cleaning task corresponding to the specific scene may be determined according to the specific scene included in the scene triggering message, and the robot may be controlled to execute the determined cleaning task.

For instance, a room may include at least one monitoring camera and a robot. The at least one monitoring camera may collect an image in real time, and conduct scene identification on the image collected in real time, such that whether the current scene is the specific scene is determined. In a case where determining that the current scene is the specific scene, the scene triggering message including the determined specific scene may be generated and transmitted to the robot. After receiving the scene triggering message, the robot may determine and execute the cleaning task corresponding to the specific scene in the specific scene in the scene triggering message.

In the example, the image collected in real time may be identified by the image collecting device, and then the specific scene may be determined more accurately. Moreover, the scene triggering message including the specific scene may be transmitted to the robot, such that accuracy of the determined specific scene can be improved, and computing power of the robot can be saved.

In one example that provides an embodiment for S102, the image collected in real time may be input into a scene identification model, and whether the current scene is the specific scene may be determined.

The scene identification model is a neural network model configured to identify the current scene and determine whether the current scene is the specific scene. Or the scene identification model is a neural network model configured to identify the current scene and determine whether the current scene satisfies the condition of the specific scene. A training process of the scene identification model may include the following steps: an original model is trained on the basis of a training sample in a training set, and the scene identification model is obtained. The training sample is an image sample or a video sample, and may include a common scene image, a common scene video, a specific scene image, and a specific scene video. The training sample is marked with a scene label, and may include a common scene label and a specific scene label.

Optionally, the original model may be trained on the basis of the image sample or the video sample in the training set and the scene label marked on each image sample or each video sample until the original model converges, such that the scene identification model may be obtained. It may be understood that the original model is trained with the training sample in the training set, the scene identification model may be obtained more efficiently and accurately, and further accuracy of determining whether the current scene satisfies the condition of the specific scene or determining whether the current scene is the specific scene through the scene identification model can be improved.

In the example, a pre-trained scene identification model is introduced, and the current scene is identified through the scene identification model, such that whether the current scene is the specific scene can be determined more accurately and efficiently, and efficiency and accuracy of controlling the robot to execute the cleaning task corresponding to the specific scene can be improved in a case where determining that the current scene is the specific scene.

In one example, if the cleaning task further includes a self-cleaning mode, the robot may be controlled to conduct self-cleaning in the self-cleaning mode in S103.

The self-cleaning mode is a mode of cleaning the robot itself. For instance, if the robot is a sweeping robot provided with cleaning accessories such as a side brush and a mop, the self-cleaning mode may indicate that the robot returns to a base station, and the base station cooperates with a host of the robot to clean the cleaning accessories. In a cleaning process, a cleaning effect of the cleaning accessories may be further checked, such that whether the cleaning task is completed may be determined.

Optionally, after the robot is controlled to finish cleaning the to-be-cleaned zone in the cleaning mode during the cleaning time, the self-cleaning mode in the cleaning task may be determined, and then the robot may be controlled to clean itself in the self-cleaning mode.

In the example, the self-cleaning mode is set in the cleaning task. After the robot is controlled to finish cleaning the to-be-cleaned zone, the robot is controlled to conduct self-cleaning in the self-cleaning mode. Thus, a user operation of transmitting a self-cleaning instruction to the robot can be canceled, and convenience and use experience of a user are improved.

On the basis of the example, in one example, in a case where determining that the specific scene is the target object scattering scene, in the process of controlling the robot to conduct self-cleaning, components in the cleaning accessories of the robot may be further detected until the cleaning accessories include no components of the target object, such that it is determined that the robot finishes self-cleaning.

The cleaning accessories may be accessories used by robots for cleaning, such as a side brush and a wiping cloth.

Optionally, the components in the cleaning accessories of the robot may be detected after periodic self-cleaning of the robot is finished; in a case where detecting that the cleaning accessories include the components of the target object, the robot may be controlled to re-conduct the periodic self-cleaning; and in a case where detecting that the cleaning accessories include no components of the target object, the robot may be controlled to finish self-cleaning.

Periodic self-cleaning is a self-cleaning stage of the self-cleaning mode. For instance, periodic self-cleaning may be a self-cleaning stage lasting for 2 min. On the basis of configuration information of the robot, the robot may be controlled to finish fixed times of periodic self-cleaning after cleaning is completed.

For instance, if the specific scene is infant urination, the components in the cleaning accessories of the robot may be detected after one time of periodic self-cleaning of the robot is finished. In a case where detecting that the cleaning accessories include urine, the robot may be controlled to re-conduct periodic self-cleaning. In a case where detecting that the cleaning accessories include no urine, the robot may be controlled to finish self-cleaning, and this cleaning task is completed.

In the example, in a case where determining that the specific scene is the target object scattering scene, the components in the cleaning accessories of the robot are detected until it is detected that the cleaning accessories include no components of the target object. Thus, cleanliness of the cleaning accessories of the robot can be ensured, and a reverse effect generated when a cleaning task is executed next time can be avoided.

On the basis of the above examples, specific examples corresponding to different specific scenes may be obtained as follows.

In one example, in a case where detecting dog food scattering in the current scene according to the image collected in real time, it may be determined that the current scene belongs to the specific scene of target object scattering. Further, a cleaning mode adapted to a target object may be determined to be a sweeping mode according to dog food as the target object, and the robot may be controlled to clean a dog food scattering zone in the sweeping mode after preset duration (for instance, 5 min) from a dog food scattering moment in a case of no person in the dog food scattering zone. After cleaning of the dog food scattering zone is completed, the robot may be controlled to return to the base station and conduct self-cleaning. After self-cleaning of the robot is finished, the components in the cleaning accessories of the robot may be detected. In a case where detecting that the cleaning accessories include no dog food, the robot may be controlled to finish self-cleaning.

In one example, in a case where detecting water stains behind an infant in the current scene according to the image collected in real time, it may be determined that the current scene belongs to the specific scene of target object scattering. Further, a cleaning mode adapted to a target object may be determined to be a mopping mode according to infant urine as the target object, and the robot may be controlled to clean a crawling zone after infant urination in the mopping mode after preset duration (for instance, 5 min) from an infant urination moment in a case of no person in the crawling zone after infant urination. After cleaning of the crawling zone after infant urination is completed, the robot may be controlled to return to the base station and conduct self-cleaning. After self-cleaning of the robot is finished, the components in the cleaning accessories of the robot may be detected. In a case where detecting that the cleaning accessories include no urine, the robot may be controlled to finish self-cleaning.

In one example, in a case where detecting that a user eats in a restaurant in the current scene according to the image collected in real time, it may be determined that the current scene belongs to the specific scene of target site staining. Further, a cleaning mode adapted to a target site may be determined to be an absorption and mopping mode according to the restaurant as the target site, and the robot may be controlled to clean the restaurant in the absorption and mopping mode after preset duration (for instance, 10 min) from an end moment of eating of the user. After cleaning of the restaurant is completed, the robot may be controlled to return to the base station and conduct self-cleaning. After self-cleaning of the robot is finished, the components in the cleaning accessories of the robot may be detected. In a case where detecting that the cleaning accessories include no rice, spilled food liquid or other components, the robot may be controlled to finish self-cleaning.

In one example, in a case where detecting that a dog is bathed in a bathroom in the current scene according to the image collected in real time, it may be determined that the current scene belongs to the specific scene of target site staining. Further, a cleaning mode adapted to a target site may be determined to be a mopping mode according to the bathroom as the target site, and the robot may be controlled to clean the bathroom in the mopping mode after preset duration (for instance, 8 min) from an end moment of dog bathing. After cleaning of the bathroom is completed, the robot may be controlled to return to the base station and conduct self-cleaning. After self-cleaning of the robot is finished, the components in the cleaning accessories of the robot may be detected. In a case where detecting that the cleaning accessories include no pet shower gel, the robot may be controlled to finish self-cleaning.

The disclosure further provides examples of an apparatus and an applied terminal, corresponding to the example of the above method.

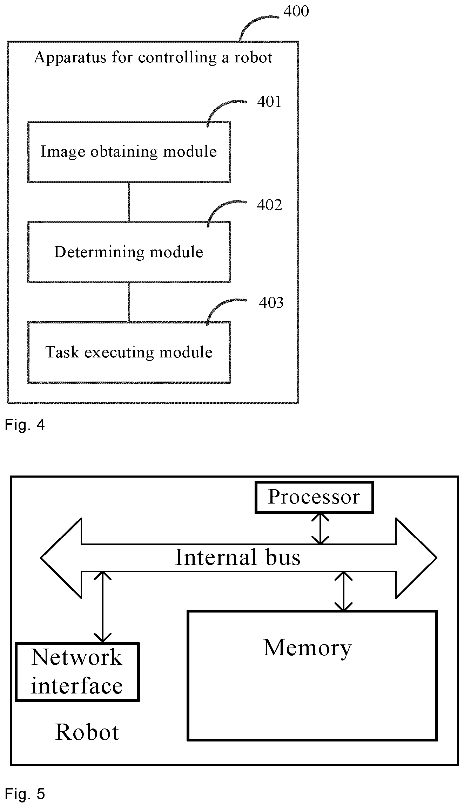

A second aspect of the disclosure provides an apparatus for controlling a robot. With reference to Fig. 4, the apparatus for controlling a robot 400 includes:
an image obtaining module 401 configured to obtain an image collected in real time;
a determining module 402 configured to determine whether a current scene is a specific scene according to the image collected in real time; and
a task executing module 403 configured to control, in a case where determining that the current scene is the specific scene, the robot to execute a cleaning task corresponding to the specific scene.

In one of the examples, the image obtaining module 401 is specifically configured to:
obtain the image collected by an image collecting component in real time; and/or,
receive an image transmitted by at least one image collecting device. The at least one image collecting device is in communication connection to the robot.

In one of the examples, the apparatus for controlling a robot 400 further includes:
a first triggering module configured to receive a scene triggering message transmitted by at least one image collecting device, and control the robot to execute a cleaning task corresponding to a specific scene indicated by the scene triggering message.

In one of the examples, the cleaning task includes a to-be-cleaned zone, cleaning time, and a cleaning mode.

The task executing module 403 is specifically configured to:
control the robot to clean the to-be-cleaned zone in the cleaning mode during the cleaning time.

In one of the examples, the determining module 402 is specifically configured to:
input the image collected in real time into a scene identification model, and determine whether the current scene satisfies the condition of the specific scene.

In one of the examples, the apparatus for controlling a robot 400 further includes:
a model training module configured to train an original model on the basis of a training sample in a training set, and obtain the scene identification model. The training sample is an image sample or a video sample. The training sample is marked with a scene label.

In one of the examples, the cleaning task further includes a self-cleaning mode. The task executing module 403 is specifically configured to:
control the robot to conduct self-cleaning in the self-cleaning mode.

In one of the examples, the specific scene includes at least one of the following scenes:
a target site staining scene; and
a target object scattering scene.

In one of the examples, the task executing module 403 is specifically configured to:
control, in a case where determining that the specific scene is the target site staining scene, the robot to clean a target site in a cleaning mode adapted to the target site after preset duration from an end of use of the target site; and
control, in a case where determining that the specific scene is the target object scattering scene, the robot to clean a target object scattering zone in a cleaning mode adapted to a target object after preset duration from a target object scattering moment in a case of no person in the target object scattering zone.

In one of the examples, in a case where determining that the specific scene is the target object scattering scene, the apparatus for controlling a robot 400 further includes:
a component detecting module configured to detect, in a process of controlling the robot to conduct self-cleaning, components in cleaning accessories of the robot until the cleaning accessories include no components of a target object.

In one of the examples, the component detecting module is specifically configured to:
detect the components in the cleaning accessories of the robot after self-cleaning of the robot is finished;
control, in a case where detecting that the cleaning accessories include the components of the target object, the robot to re-conduct self-cleaning; and
control, in a case where detecting that the cleaning accessories include no components of the target object, the robot to finish self-cleaning.

In one of the examples, the apparatus for controlling a robot 400 further includes:
a second triggering module configured to control, in a process that the robot executes a scheduled cleaning task or a cleaning task instructed by a user instruction, the robot to stop the scheduled cleaning task or the cleaning task instructed by the user instruction and to execute the cleaning task corresponding to the specific scene in a case where receiving triggering information of the specific scene.

In one of the examples, the determining module 402 is specifically configured to:
determine whether a current scene satisfies a condition of a specific scene according to the image collected in real time;
determine, in a case where determining that the current scene satisfies the condition of the specific scene, the current scene is the specific scene, otherwise determin the current scene is an ordinary scene.

Specifically, reference is made to an implementation process of corresponding steps in the method for an implementation process of functions and effects of all the modules in the apparatus in details, which will not be repeated here.

A third aspect of the disclosure provides a computer program product. The computer program product includes a computer program/instruction. When the computer program/instruction is executed by a processor, the method according to the first aspect is implemented.

For the apparatus example and the computer program product example, since the examples substantially correspond to the example of the method, reference is made to the method example for relevant parts of the examples. In addition, the above apparatus example is merely illustrative. Modules described as separate components may be physically separated or not, and components displayed as modules may be physical modules or not. That is, the components may be located at one place, or distributed on a plurality of network modules. Some modules or all modules may be selected according to actual needs, so as to implement the solutions of the disclosure. Those of ordinary skill in the art can understand and implement the disclosure without making the inventive effort.

In a fourth aspect, some examples of the disclosure provide a robot. Fig. 5 shows a structure of the robot. The robot includes a memory and a processor. The memory is configured to store a computer instruction runnable on the processor. The processor is configured to implement any method for controlling a robot according to the first aspect when executing the computer instruction.

In a fifth aspect, in the examples, the disclosure further provides a non-transitory computer-readable storage medium including an instruction, such as a memory including an instruction. The instruction may be executed by a processor of a robot or a computer device, such that the method for controlling a robot is completed. For instance, the non-transitory computer-readable storage medium may be a read only memory (ROM), a random access memory (RAM), a compact disc-read only memory (CD-ROM), a magnetic tape, a floppy disk, an optical data storage device, etc.

Specific examples of the disclosure are described above. Other examples are within the scope of the appended claims. In some cases, actions or steps recited in the claims may be executed in a different order from those in the examples and still achieve a desired result. In addition, the processes depicted in the drawings do not necessarily require a specific order or a continuous order shown to achieve the desired result. In some embodiments, multitasking and parallel processing are also possible or may be advantageous.

## Claims

1. A method for controlling a robot, comprising:
obtaining (S101) an image collected in real time;
determining (S102) whether a current scene is a specific scene according to the image collected in real time; and
controlling (S103), in a case where determining that the current scene is the specific scene, the robot to execute a cleaning task corresponding to the specific scene.

2. The method according to claim 1, wherein the obtaining the image collected in real time comprises at least one of:
obtaining the image collected by an image collecting component in real time; or,
receiving an image transmitted by at least one image collecting device, wherein the at least one image collecting device is in communication connection to the robot.

3. The method according to claims 1 or 2, further comprising:
receiving a scene triggering message transmitted by at least one image collecting device, and controlling the robot to execute a cleaning task corresponding to a specific scene indicated by the scene triggering message.

4. The method according to any one of claims 1 to 3, wherein the cleaning task comprises a to-be-cleaned zone, cleaning time, and a cleaning mode; and
the controlling the robot to execute a cleaning task corresponding to the specific scene comprises:
controlling the robot to clean the to-be-cleaned zone in the cleaning mode during the cleaning time;
wherein the specific scene comprises at least one of the following:
a target site staining scene; or
a target object scattering scene.

5. The method according to any one of claims 1 to 4, wherein the determining (S102) whether the current scene is the specific scene according to the image collected in real time comprises:
inputting the image collected in real time into a scene identification model, and
determining whether the current scene is the specific scene.

6. The method according to claim 5, wherein a training process of the scene identification model comprises:
training an original model based on a training sample in a training set, and obtaining the scene identification model, wherein the training sample is an image sample or a video sample, and the training sample is marked with a scene label.

7. The method according to any one of claims 1 to 6, wherein the cleaning task further comprises a self-cleaning mode, and the controlling the robot to execute the cleaning task corresponding to the specific scene comprises:
controlling the robot to conduct self-cleaning in the self-cleaning mode.

8. The method according to any one of claims 4 to 7, wherein the controlling the robot to clean the to-be-cleaned zone in the cleaning mode during the cleaning time comprises:
controlling, in a case where determining that the specific scene is the target site staining scene, the robot to clean a target site in a cleaning mode adapted to the target site after preset duration from an end moment of use of the target site; and
controlling, in a case where determining that the specific scene is the target object scattering scene, the robot to clean a target object scattering zone in a cleaning mode adapted to a target object after preset duration from a target object scattering moment in a case of no person in the target object scattering zone.

9. The method according to any one of claims 4 to 8, wherein in a case where determining that the specific scene is the target object scattering scene, the method further comprises:
detecting, in a process of controlling the robot to conduct self-cleaning, components in cleaning accessories of the robot until the cleaning accessories comprise no components of a target object.

10. The method according to claim 9, wherein the detecting components in cleaning accessories of the robot until the cleaning accessories comprise no components of the target object comprises:
detecting the components in the cleaning accessories of the robot after periodic self-cleaning of the robot is finished;
controlling, in a case where detecting that the cleaning accessories comprise the components of the target object, the robot to re-conduct the periodic self-cleaning; and
controlling, in a case where detecting that the cleaning accessories comprise no components of the target object, the robot to finish self-cleaning.

11. The method according to any one of claims 1 to 10, further comprising:
controlling, in a process that the robot executes a scheduled cleaning task or a cleaning task instructed by a user instruction, the robot to stop the scheduled cleaning task or the cleaning task instructed by the user instruction and to execute the cleaning task corresponding to the specific scene in a case where receiving triggering information of the specific scene.

12. The method according to any one of claims 1 to 11, wherein the determining (S102) whether the current scene is the specific scene according to the image collected in real time comprises:
determining whether a current scene satisfies a condition of a specific scene according to the image collected in real time;
determining, in a case where determining that the current scene satisfies the condition of the specific scene, the current scene is the specific scene, otherwise determining the current scene is an ordinary scene.

13. A computer program product, comprising a computer program/instruction, wherein when the computer program/instruction is executed by a processor, cause the processor to implement steps of the method according to any one of claims 1 to 12.

14. A robot, comprising a memory, a processor, and a computer program stored in the memory and runnable on the processor, wherein the processor is configured to:
obtain (S101) an image collected in real time;
determine (S102) whether a current scene is a specific scene according to the image collected in real time; and
control (S103), in a case where determining that the current scene is the specific scene,
the robot to execute a cleaning task corresponding to the specific scene.

15. A non-transitory computer-readable storage medium, storing a computer program, wherein the computer program implements when executed by a processor causes the processor to execute the method according to any one of claims 1 to 13.
